# EUROPEAN PATENT APPLICATION

(11) **EP 1 348 740 A1**
(43) Date of publication of application: **01.10.2003**
(21) Application number: 03005688.1
(22) Date of filing: 13.03.2003
(51) Int. Cl.: C09D 1/02, C09D 1/00, C09D 1/04, C09D 5/08, C09D 5/10

(54) **A high temperature-resistant antioxidizing dye**

(30) Priority: 27.03.2002 TR 200200828
(71) Applicant: Eda Yapi Sisitemleri Ithalat Ihracat San. Ve Tic. Ltd. Sti, Istanbul (TR)
(72) Inventor: Telli, Tarik, A/1 Uskundar, Istanbul (TR)
(74) Representative: Dereligil, Ersin

(57) **Abstract**

The present invention is related to an antioxidizing dye that is applied on metal, like steel, iron surfaces, thus does not only strengthens the effect of the site whereon it is applied, but also can be applied at room temperature, and is resistant to high temperatures; and to materials which acquire an antioxidizing property by the application of the said dye thereon. The said dye comprises elemental zinc in the form of dust, a second dust mixture consisting of silicium- and calcium-based inorganic oxide particles, a hardening liquid formed with a chemical combination of K₂OSiO₂•2H₂O and ZnSO₄•7H₂O, and a binding acrylic.

## Description

### Technical Field

The present invention is related to a high temperature-resistant liquid antioxidizing dye, and to materials that acquire antioxidizing property by applying said dye thereon.

More specifically, the present invention is related to a liquid antioxidizing dye that is applied on metal, like steel, iron surfaces, materials or structures, thus does not only strengthens the effect of the site whereon it is applied, but also can be applied at room temperature, and is resistant to high temperatures.

### Background of the Invention

There are numerous doctrines and applications relevant to the protection of metal surfaces against external effects, primarily corrosion.

Conventionally, it is possible to protect a metal surface against corrosion by providing an electrical contact between the said metal surface and another metal surface having a lower standard electrode voltage, as in galvanized steel. Similarly, it is also known to coat steel surfaces with dyes comprising zinc dusts; generally, the said dyes comprising mainly zinc dusts are reinforced by binders such as zinc silicate or epoxy resins.

In brief, the currently used prevalent antioxidizing dyes are formed with epoxy materials, dusts such as zinc or chromium, and are made by fusing zinc in an oven at a temperature of 600 to 700°C and adhering to the steel.

There are some drawbacks for the above-mentioned systems. The antioxidizing property of epoxy-based dyes is very short-lived dyes and oxidation may occur for some reasons, such as dye faults, damages.

Furthermore, the fusion of the material is carried out at a temperature of 600 to 700°C in order to perform the zinc and chromium coating, and as a result of this, there occur a decrease in the tensile strength of the steel material.

Currently, also there are systems wherein the zinc coating is carried out in an electrical furnace. However, some deficiencies accompanied with these latter systems are observed. For example, an antioxidant made by this way may undergo corrosion. Moreover, because of the size of the machine, the size of the material to be antioxidized is limited, and also the cost of the electrical furnace used for coating becomes very high.

Particularly, in dye applications wherein zinc are used and which is epoxy-based, some undesired results may rise as epoxy is dissolved, due to exposure of heat by the sun or by another source, or zinc loses its characteristic.

### The Summary of the Invention

The object of the present invention is to provide antioxidizing dye for steel and iron materials and surfaces, e.g. in the form of sheets, rods or wire, wherein the above-mentioned drawbacks are eliminated, and the said dye can be applied at room temperature.

Another important object of the invention is to provide an antioxidizing dye which is resistant to high temperatures.

Furthermore, another object of the invention is to provide materials which acquire antioxidizing property by the application of the said dye thereon.

Also further object of the invention is to provide an antioxidizing dye with a property of preventing corrosion completely even if the said dye is applied on one face of the material, or deformations are formed on the material on purpose and the said material is kept in a brine solution.

In order to achieve the above objects, the composition of the antioxidizing dye according to the present invention comprises:
- elemental zinc in the form of dusts
- a second dust mixture consisting of inorganic oxide particles
- hardening liquid, and
- binding acrylic.

The said inorganic oxide particles comprise SiO₂, Al₂O₃, Fe₂O₃, K₂O, CaO, and TiO₂. It is preferred that it comprises essentially SiO₂ and CaO.

The said hardening liquid is a compound which does not contain calcium and is the compound formed with a chemical combination of K₂OSiO₂•2H₂O and ZnSO₄•7H₂O.

Owing to the antioxidizing dye obtained, the antioxidizing characteristic of steel and iron materials and surfaces, for example in the form of sheet, rod or wire, is further improved.

Also the present invention provides a dye wherein oxidation is prevented by means of the electrical current generated in the mixture of the present invention even if there are dye faults or damages on the material.

Although one face of sheet (iron) is dyed, because the potential difference of 0.5 to 1.00V between iron and zinc, the deep splits formed on the undyed surface or sheet are not influenced by brine and so do not oxidized.

Another characteristic of the invention, distinguishing it from the other applications, is that in the method according to this invention, the resulting product can resist to a temperature of 1300°C for at least one hour whereas in the conventionally used techniques, the fusion of zinc and adhesion of it to a steel material is carried out at a temperature of 600 to 700°C.

### The Detailed Description of the Invention

The high temperature resistant- antioxidizing dye, the subject of the present invention described above in general, is formed by mixing the constituents given in the Example 1 below (based on the total weight of the composition), and curing them.

### Example 1:

| **Contents** | **Weight Percent (%)** |
|---|---|
| Elemental zinc in the form of dust | 65-90 |
| Second dust mixture (preferably SiO₂ + CaO) | 5-20 |
| Hardening liquid | 10-30 |
| Binding acrylic | 2-15 |

The resulting dye obtained is applied to the surface by means of a paint brush, paint roller or spray pistol. The antioxidizing dye according to the invention coats over the surface with a thickness of 50 to 100 µm. Because this application can be carried out at room temperature, it has no effect on the bearing strength of the material.

The antioxidizing dye according to the invention is formed by mixing the elemental zinc in the form of dust with a second dust mixture consisting essentially silicium dioxide and calcium oxide; adding the compound formed with a chemical combination of K₂OSiO₂•2H₂O and ZnSO₄•7H₂O to the resulting mixture; and adding acrylic as a binder.

The said hardening liquid comprises preferably 85-95% K₂OSiO₂2H₂O by weight and 5-15% ZnSO₄7H₂O by weight.

Alternatively, instead of the usage of the said second dust mixture consisting essentially silicium dioxide and calcium oxide, it is also possible to use some slags well known in the art in order to reduce the cost.

In another preferred embodiment of the invention, the rates of the contents of the second dust mixture that can be used through the addition of the latter to zinc dust is given in the Example 2 below, only for the purpose of exemplification:

### Example 2: The Rates of Dust Contents

| **Material** | **Weight Percent (%)** |
|---|---|
| SiO₂ | 50,8 |
| Al₂O₃ | 15,7 |
| Fe₂O₃ | 15,6 |
| K₂O | 8,8 |
| CaO | 3,3 |
| TiO₂ | 2,9 |
| MgO | 0,7 |
| Cl | 0,4 |
| BaO | 0,3 |
| SO₃ | 0,3 |
| P₂O₅ | 0,2 |
| MnO | 0,2 |
| SrO | 0,1 |
| ZrO₂ | 0,1 |
| Rb₂O | 0,1 |
| Cr₂O₃ | 0,1 |
| ZnO | 0,1 |
| Na₂O | 0,1 |

The resulting antioxidizing dye is applied with a thickness of 50µm, for example, by doing a shop primer over the surface of a sheet plate with a dimension of 150x70x3 mm (SS-30) and is allowed to be hardened for 24 hours.

The results obtained from some physical and chemical examinations which are done at the end of the above mentioned process are given in the following table.

**Table**

| **Test Subject** | **Test Conditions** | **Results** |
|---|---|---|
| Combination | JISK5400 | 100% |
| Scratching | JISK5400 | 7 to 8 |
| 5% brine | 60°C, for 1000 hours | no change |
| Anti-alkali | Ca(OH)₂, for 1000 hours | no change |
| Anti-acid | 5% HCI, for 48 hours | no change |
| Stroke | JISK5400 ½ inch, 500g x 20cm | no change |
| Bending | 90° folding | no change |
| Water penetration | JISK5400 ml/m²/gün | 0.8x10² |
| Heat-resistance | 700°C, for 12 hours | no change |
| Fire-resistance | 1300°C, for 1 hour | no change |
| Brine spray | JIS Z2371, for 2000 hour | no change |
| Air condition | outside, 5% brine, for 1 year with twice sprays a day | no change |

When the antioxidizing dye according to the present invention is applied only over one face of a sheet (iron) plate and the medium is rendered a medium having an electrical current by means of water, brine, etc., since an electrical difference of 0.5 to 1.00 V is generated, iron does not ionize, i.e. does not acidify, so oxidation does not occur.

It is evident that the foregoing explanations are directed to a preferred embodiment of the invention and so they are not construed to be viewed as limiting the scope of the invention. For this reason, this invention is evaluated in the scope of the claims appended.

Furthermore, in the light of the above description of the present invention, it is apparent that a person skilled in the art is able to form the ceramic material according to the invention, which can harden at room temperature, by using compounds and methods like those used in the invention.

## Claims

1. A high temperature-resistant liquid antioxidizing dye being applicable at room temperature, comprising;
elemental zinc in the form of dust,
a second dust mixture consisting of inorganic oxide particles,
a hardening liquid formed with a chemical combination of K₂OSiO₂•2H₂O and ZnSO₄•7H₂O, and
a binding acrylic
whereby the ingredients are formed by mixing thereof and curing the obtained mixture.

2. The antioxidizing dye according to the claim 1, wherein the inorganic oxide particles constituting said second dust mixture comprises compounds, which are selected from the group consisting of SiO2, Al2O3, Fe203, K2O, CaO, and TiO2, particularly silicium dioxide and calcium oxide.

3. The antioxidizing dye according to the claim 1 or 2, wherein the antioxidizing dye comprises 65-90% zinc dust by weight of the total weight of the dye ingredients.

4. The antioxidizing dye according to the claim 1 or 2, wherein the antioxidizing dye comprises 5-20% second dust mixture by weight of the total weight of the dye ingredients.

5. The antioxidizing dye according to the claim 1 or 2, wherein the antioxidizing dye comprises 10-35% hardening liquid by weight of the total weight of the dye ingredients.

6. The antioxidizing dye according to the claim 1 or 2, wherein the antioxidizing dye comprises 2-15% binding acrylic by weight of the total weight of the dye ingredients.

7. The antioxidizing dye according to any one of the preceding claims, wherein said hardening liquid comprises 85-95% K2OSiO22H2O by weight, and 5-15% ZnS047H20 by weight.

8. Iron-based and steel-based metallic materials acquiring antioxidizing feature by the application of the antioxidizing dye according to any one of the preceding claims thereon.
